# FASCICULE DE BREVET EUROPEEN

(11) **EP 1 007 382 B1**
(45) Date de publication et mention de la délivrance du brevet: **25.06.2003**
(21) Numéro de dépôt: 98942820.6
(22) Date de dépôt: 03.09.1998
(51) Int. Cl.: B60J 5/04

(54) **PORTE DE VEHICULE**
FAHRZEUGTÜR
VEHICLE DOOR

(30) Priorité: 05.09.1997 DE 19738853
(43) Date de publication de la demande: 14.06.2000
(73) Titulaire: Visteon Global Technologies, Inc., Dearborn, Michigan 48126-2490 (US)
(72) Inventeur: TIMMERMANN, Alwin, D-50933 Koln (DE)
(74) Mandataire: McLean, Robert Andreas
(86) Numéro de dépôt international: FR9801889
(87) Numéro de publication internationale: WO99012757

(56) Documents cités:
- EP-A- 0 579 535
- EP-A- 0 773 126
- DE-A- 3 209 052
- DE-A- 3 217 640
- DE-A- 19 509 282
- FR-A- 2 543 890

## Description

L'invention concerne une porte de véhicule comportant une structure de porte constituée d'une paroi extérieure et de parois inférieure et latérales, ouverte vers l'intérieur du véhicule, un support d'équipements a une zone en forme de caisson, la surface intérieure du caisson orientée vers l'intérieur du véhicule étant pourvue de moyens de fixation pour le montage des équipements destinés à l'intérieur du véhicule, tels que poignée de porte, haut-parleurs et autres, le support d'équipements pouvant être fixé à la structure de porte et portant des équipements déjà fixés, tels que vitre, les mécanismes d'entraînement et de guidage pour son déplacement, et autres. Le support d'équipements supporte essentiellement les équipements déterminant en matière de poids et/ou exerçant et/ou transmettant des forces. La porte de véhicule comporte encore un parement intérieur. Le support d'équipements est disposé entre la paroi extérieure de la porte et le parement intérieur.

Il est connu une construction du type modulaire pour des portes de véhicules (DE-A-195 09 282), selon laquelle le support d'équipements est réalisé avec la forme d'une plaque plane avec des fixations et des ouvertures. Sur la plaque porteuse, un habillage intérieur peut être fixé, celui-ci possédant une forme correspondant au style souhaité.

La plaque porteuse et l'habillage ne sont suffisamment stables pour être manipulés comme module que lorsqu'ils sont assemblés l'un à l'autre.

Toutefois, après ce prémontage, il existe un risque que l'habillage soit dégradé durant l'installation dans la portière et qu'il soit nécessaire de le remplacer.

De telles portes de véhicules sont encore, par exemple, décrites dans les documents DE-A1-32 09 052 et DE-A1-32 17 640.

Selon ces réalisations, le support d'équipements est également une plaque de support continue en tôle ou en résine de polyester renforcee de fibres de verre. Afin d'augmenter la rigidité, la plaque de support est pourvue d'éléments de renfort, par exemple des nervures de renfort, ou bien des tubes de renfort sont formés dans le support d'équipements ou glissés dans des canaux correspondants du support d'équipements. Sur le côté tourné vers l'intérieur du véhicule, la plaque de support d'équipements est pourvue d'un recouvrement intérieur, de préférence d'une couche de mousse garnie de tissu et/ou floquée. La plaque de support d'équipements possède des évidements et/ou des espaces creux moulés, dans lesquels les équipements et/ou des parties d'équipements sont disposés et fixés à la plaque de support avant que celle-ci ne soit vissée à la structure de porte.

Le document EP-A-0 773126 révèle une porte de véhicule, comportant une structure de porte constituée d'une paroi extérieure, un support d'équipements pouvant être fixé à la structure de porte, comportant des équipements déjà montés, tels que vitre de fenêtre, mécanisme lève-vitre, moteur lève-vitre et autres, qui supporte essentiellement les équipements déterminant en matière de poids et/ou exerçant et/ou transmettant des forces et un habillage intérieur. Dans cette porte de l'art antérieur, le support d'équipements comprend au moins une zone en forme de caisson en forme de coque, résistant au gauchissement, avec une paroi continue parallèle à la paroi extérieure de la porte, alors que, selon l'invention revendiquée, la surface extérieure du caisson orientée vers la paroi extérieure de porte est parallèle et à proximité d'une ligne de déplacement de la vitre pouvant être abaissée dans l'espace entre la paroi extérieure de la porte et ladite surface du caisson. La surface intérieure du caisson orientée vers l'intérieur du véhicule est pourvue de moyens de fixation pour le montage des équipements destinés à l'intérieur du véhicule, tels que poignée de porte, haut-parleurs ou autres.

L'invention a pour but de perfectionner une porte de véhicule présentant une telle structure de base de telle manière que le support d'équipements remplisse sa fonction sans élément supplémentaire de renfort, tout en optimisant l'utilisation de l'espace disponible dans la structure de porte, et que la porte, dans son ensemble, soit réalisée à moindre coût.

Ce but est atteint selon l'invention par une porte de véhicule possédant les caractéristiques énoncées à la revendication 1.

Le support d'équipements comprenant au moins une zone en forme de caisson à double coque, résistant au gauchissement, constitué de deux parois continues espacées l'une de l'autre et parallèles à la paroi extérieure de la porte, forme un élément stable sans la participation d'un habillage intérieur ou d'autres éléments.

Par ailleurs, la surface extérieure du caisson tournée vers la paroi extérieure de la porte, s'étendant avec une distance limitée et parallèlement à la ligne de déplacement de la vitre pouvant être abaissée dans l'espace entre la paroi extérieure de la porte et ladite surface du caisson, l'utilisation de l'espace restreint dans la structure de porte est optimisé . Il doit être précisé que, sur toutes les voitures modernes, les vitres latérales de porte qui sont mobiles sont bombees au moins cylindriquement afin de diminuer la résistance à l'air. Ladite ligne de déplacement est donc habituellement courbe. La forme décrite de la surface du support d'équipements, orientée vers la fosse de la vitre ou la tôle extérieure de la porte utilise ladite condition marginale pour un renforcement de surface sans élément complémentaire.

Il peut également être prévu des ouvertures dans le caisson pour l'installation d'équipements tels que haut-parleurs ou autres. Avantageusement, l'ensemble de ces ouvertures est réalisé sur la face du support d'équipements orientée vers l'intérieur du véhicule, et elles n'affectent pas sa rigidité propre.
La surface de la zone en forme de caisson du support d'équipements, orientée vers la tôle extérieure de la porte limite la zone dite humide, laquelle est essentiellement constituée de la fosse de vitre. De ce côté, doivent habituellement être également installés des équipements (par exemple : le mécanisme d'entraînement des lève-vitres, les rails de guidage). Des moyens de fixation appropriés peuvent être prévus de ce côté extérieur du caisson. Dans chaque cas, le nombre et la dimension des ouvertures nécessaires dans la surface de la paroi extérieure doivent être minimisés. De cette façon, la paroi fermée de la zone en caisson constitue une étanchéité durable contre les pénétrations de salissures et d'humidité depuis la zone humide vers l'intérieur du caisson et du véhicule.

La paroi, orientée vers l'intérieur du véhicule peut être conçue directement en fonction des idées styliques du moment sans devoir tenir compte des nécessités techniques pour le montage des équipements. De cette manière, avec le support d'équipements conforme à l'invention, les fonctions techniques et les différentes fonctions décoratives sont entièrement séparées l'une de l'autre, ce qui constitue un énorme avantage au niveau de la liberté de conception du côté intérieur de la porte.

Il est possible de réaliser la zone en forme de caisson du support d'équipements, selon les possibilités de fabrication en plusieurs parties, par exemple, en deux, chaque partie formant une paroi, ou en un élément unique, par exemple réalisé par soufflage ou pressage à partir d'un produit plastique semi-fini. Les techniques de fabrication par soufflage sont connues pour la réalisation de formes très complexes telles que des réservoirs pour carburant en matière plastique polymérisée.

Pour les réalisations en plusieurs parties, les deux parties en forme de coque ou cuve du support d'équipements sont de préférence fixées l'une à l'autre le long de l'ensemble de la périphérie des deux coques ou, si une des coques est plus petite que l'autre, le long de l'ensemble de la périphérie de la plus petite des coques, par exemple par collage ou par soudage. De cette manière, la structure en caisson du support d'équipements acquiert une rigidité et une résistance au gauchissement particulièrement élevées.

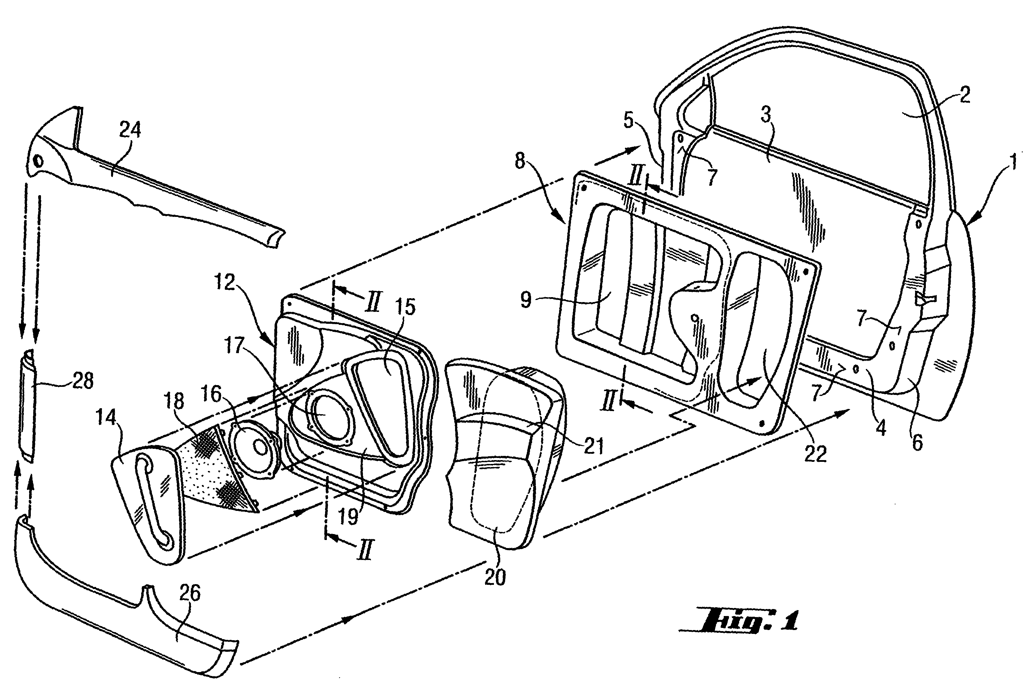

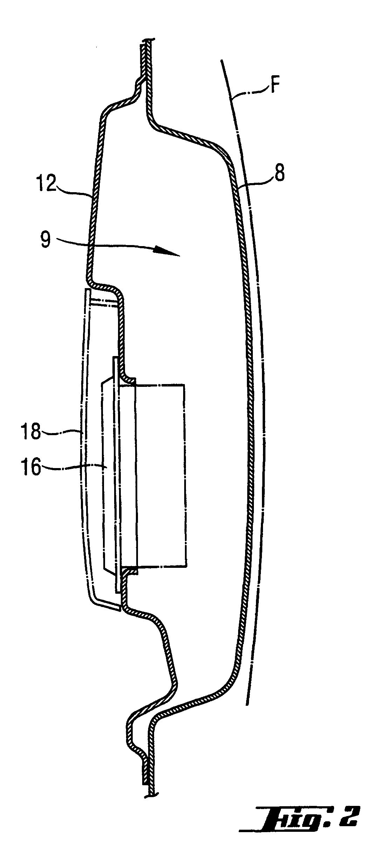

Un exemple de réalisation de l'invention sera décrit ci-après de manière plus détaillée à l'aide des figures, qui représentent :
→ **Figure 1** : une vue éclatée d'une porte de véhicule conforme à l'invention,
→ **Figure 2** : un schéma d'une vue en coupe de la zone en caisson du support d'équipements, selon la ligne II-II de la figure 1.

La porte selon l'invention comprend une construction métallique classique, avec une structure de porte inférieure 1 formant un puits et un cadre de fenêtre 2 fixé à la structure de porte. La structure de porte possède une paroi extérieure 3, une paroi inférieure 4 et des parois latérales 5 et 6. La paroi inférieure 4 et les parois latérales 5 et 6 peuvent être constituées de cadres rigides séparés en profilés de section rectangulaire, mais peuvent de préférence être également constituées d'une tôle emboutie. Elles comportent des brides de fixation 7 et forment une ouverture de grande étendue dans laquelle le support d'équipements est disposé et vissé aux brides de fixation 7.

Le support d'équipements représenté ici en plusieurs parties, comprend une pièce en forme 8 essentiellement en forme de coque et une pièce en forme 12, également essentiellement en forme de coque. Les dimensions de surface des deux pièces en forme 8 et 12 possédant des zones en forme de coque et leur configuration géométrique au niveau des bords de leur coque sont adaptées l'une à l'autre, de sorte que la pièce en forme 12 peut être fixée à la pièce en forme 8 en formant un profilé en caisson avec bord fermé tout autour de la périphérie dudit caisson. Dans le cas de matériaux thermoplastiques ou métalliques, la fixation des deux pièces en forme le long de leur bord s'effectue de préférence par soudage.

On peut déjà noter, que la pièce en forme 8 comprend deux creux 9,22 ouverts dans le plan de séparation du support d'équipements en deux parties, au moins un des creux formant une partie du caisson à former. Les creux sont constitués de fonds de cuves et de parois latérales. Ces dernières s'étendent transversalement au plan de séparation du support d'équipements. Elles déterminent essentiellement son extension volumique et jouent ainsi un rôle important pour sa résistance mécanique.

Il sera revenu plus précisément sur la forme du caisson dans la zone du plus gros creux 9 ultérieurement en référence à la figure 2.

Il doit être noté, que la pièce en forme 8 peut également ne comporter qu'un creux. Dans le cas présent, le retrait existant entre les deux creux 9 et 22 est utilisable comme un espace de montage de certains équipements dans la zone humide mais il n'est pas requis dans tous les cas de figure.

Dans le cas représenté, la pièce en forme 12 tournée vers l'intérieur du véhicule ne s'étend pas sur la surface entière de la pièce en forme 8, mais recouvre seulement environ deux tiers de sa surface. Ceci est cependant tout à fait suffisant dans ce cas, parce que tous les équipements qui exercent des forces mécaniques sur la pièce en forme 8 sont disposés dans cette zone de la pièce en forme 8 qui est recouverte par la pièce en forme 12 et de ce fait particulièrement stable mécaniquement. La liaison avec la pièce en forme 12 confère à cette zone du support d'équipements une rigidité particulièrement élevée, ce système formant une structure en caisson stable.

La conception et le dimensionnement de la pièce en forme 12 peuvent en principe se faire d'après d'autres points de vue. En premier lieu, on doit tenir compte en l'occurrence du fait que la pièce en forme 12 doit augmenter la rigidité de la pièce en forme 8. En même temps, on doit cependant également tenir compte de ce que des forces plus ou moins élevées de traction sont transmises à la pièce en forme 12 lors de l'actionnement de la poignée de porte 14, ce qui doit être considéré lors du dimensionnement et de la conception de la pièce en forme 12.

Les deux pièces en forme 8 et 12 peuvent naturellement être fabriquées dans n'importe quel matériau, pour autant qu'il présente la résistance et l'indéformabilité nécessaires. En particulier, elles peuvent être fabriquées en tôle emboutie ou en matériau polymère approprié, ou en particulier également en matière plastique renforcée par des fibres de verre, le moulage ayant lieu suivant les procédés connus et habituels.

La disposition, l'arrangement et la fixation des équipements à la pièce en forme 8 du support d'équipements peut se faire de manière connue et habituelle, et n'est pas représentée dans l'exemple ici décrit. Essentiellement, les glissières de guidage pour la vitre mobile dans un sens vertical, la vitre elle-même, ainsi que le mécanisme de levage pour la vitre, sont fixés à cette pièce en forme 8. Le montage de ces équipements sur la pièce en forme 8 a lieu lors d'une étape séparée de montage. La pièce en forme 12 peut déjà être fixée sur la pièce en forme 8 avant le montage des équipements, mais il est aussi possible d'effectuer la liaison des deux pièces en forme après le montage des équipements.

Le module de porte préparé de cette manière, constitué du support d'équipements, de la vitre et de tous les équipements, est placé dans la structure de porte lors du montage final du véhicule ou de la porte de véhicule et est vissé aux brides de fixation 7.

Une barrière étanche peut être formée entre la zone humide et l'espace intérieur du véhicule par un joint déposé entre les brides de fixation 7 et le pourtour du support d'équipements fixé à celles-ci. Le joint peut, par exemple, être réalisé avec une mousse d'étanchéité extrudable.

La pièce en forme 8 et la pièce en forme 12 sont pourvues d'éléments d'enfichage ou de clipsage non représentés en détail ici, qui permettent une liaison rapide et simple d'autres éléments sur la face intérieure de la porte. On peut ainsi par exemple disposer un composant de poignée de porte 14 dans un renfoncement correspondant 15, un haut-parleur 16 dans une ouverture appropriée 17 et une grille de recouvrement 18 pour le haut-parleur 16 dans un creux correspondant 19. Une pièce en forme 20, qui est constituée d'un matériau mousse approprié et est par exemple pourvue d'une surface d'accoudoir 21, est disposée dans le creux correspondant 22 du support d'équipements et sert de protection contre les chocs. Finalement, une pièce en forme 24 est encore disposée sur le support d'équipements ou sur la bride de fixation 7 du caisson de porte, et constitue l'appui de fenêtre, et une pièce en forme 26 est disposée à la partie inférieure de la porte, pour former un logement pour cartes, une pièce en forme 28 en forme de moulure étant insérée entre ces deux pièces en forme et constituant une fermeture latérale en forme de cadre. Des revêtements supplémentaires de la pièce en forme 12 ne sont pas nécessaires, et les surfaces de la pièce en forme 12 non recouvertes par les pièces citées sont conçues directement comme des surfaces de décoration.

La coupe de la figure 2 selon la ligne II-II de la figure 1 met en évidence que la vitre descend dans la structure de porte selon une ligne de déplacement courbe F. Celle-ci se trouve dans la zone d'humidité de la porte du véhicule. La paroi du support d'équipements orientée vers l'extérieur de la porte représente le fond fermé du creux 9 de la partie en forme 8. Le fond de creux est parallèle et le plus proche possible de la ligne de déplacement F et du fait de sa surface courbée est en soi très résistant. Avec les parois latérales du creux 9 est ainsi constitue un demi-caisson stable, qui pourra être fermé par la partie en forme 12. On comprend que la taille du support d'équipements proportionnelle à l'espace intérieur de porte permet d'utiliser celui-ci au maximum.

Dans la vue en coupe sont également représentés un haut-parleur 16 et sa grille de recouvrement 18 fixés dans la partie en forme 12. Le fond de creux fermé de la partie en forme 8 constitue également une barrière sûre contre la pénétration de salissures et d'humidité depuis la zone humide de la porte. La réalisation d'une étanchéité supplémentaire dans les zones sensibles telles que les emplacements de haut-parleurs, peut être évitée.

La courbure du fond de creux présente également l'avantage de comporter les rails de guidage pour la vitre déplaçable selon la hauteur, fixés de façon intime, c'est-à-dire au contact direct du fond de creux. Ceux-ci peuvent donc être fixés au support d'équipements sans entretoises ou autres éléments, à moindre frais et avec le meilleur appui.

Lorsque le support d'équipements est réalisé en un seul élément, l'utilisation de l'espace peut encore être amélioré car la bride de séparation ou de fixation des deux parties 8 et 12 visible sur la figure 2 peut être évitée ou remplacée par des moyens de fixation en saillie à étendue limitée.

Le creux 22 prévu pour l'insertion de la pièce en forme 20 servant de protection contre les chocs est aussi profond que le creux 9. On peut ainsi mettre en place une pièce en forme atténuant les chocs particulièrement épaisse, qui accroît la sécurité passive de la porte de véhicule. Il est possible de renoncer à un habillage séparé, si la partie en forme 20 est prévue avec un matériau décoratif. Dans ce cas, le support d'équipements n'est pas réalisé en deux coquilles dans cette zone.

## Revendications

1. Porte de véhicule, comportant une structure de porte constituée d'une paroi extérieure (3) et de parois inférieure (4) et latérales (5, 6), ouverte vers l'interieur du vehicule,
un support d'équipements ayant une zone en forme de caisson, la surface intérieure du caisson orientée vers l'intérieur du vehicule étant pourvue de moyens de fixation pour le montage des équipements destinés à l'intérieur du véhicule, tels que poignée de porte, haut-parleurs ou autres, le support d'équipements pouvant être fixé à la structure de porte, comportant des équipements déjà montés, tels que vitre de fenêtre, mécanisme lève-vitre, moteur lève-vitre et autres, qui supporte essentiellement les équipements déterminant en matière de poids et/ou exerçant et/ou transmettant des forces,
un habillage intérieur,
**caracterisée en ce que** le support d'équipements comprend deux pièces (8, 12) qui sont chacune essentiellement en forme de coque en formant un profilé en caisson avec bord fermé tout autour de la périphérie dudit caisson, ces deux pièces formant deux parois expacées l'une de l'autre et parallèles à la paroi extérieure (3) de la porte et **en ce que** la surface extérieure du caisson orientée vers la paroi extérieure de porte (3) est parallèle et à proximité d'une ligne de déplacement (F) de la vitre pouvant être abaissée dans l'espace entre la paroi extérieure (3) de la porte et ladite surface du caisson.

2. Porte de véhicule selon la revendication 1, **caractérisée en ce que** la ligne de déplacement (F) et la surface du caisson qui lui est parallèle présentent une courbure.

3. Porte de véhicule selon la revendication 1 ou 2, **caracterisée en ce que** les parties en formes (8, 12) présentent des dimensions à peu près semblables et sont fixées solidement l'une à l'autre tout autour de leur périphérie.

4. Porte de véhicule selon la revendication 3, **caractérisée en ce qu'**une des deux parties en formes (12) présente des dimensions plus petites que l'autre partie en forme (8).

5. Porte de véhicule selon la revendication 1 ou 2, **caractérisée en ce que** le support d'équipements est réalisé en une seule partie et **en ce que** la zone en forme de caisson présente des ouvertures ou renfoncements pour l'installation d'équipements.

6. Porte de véhicule selon la revendication 5, **caractérisée en ce que** les ouvertures ou renfoncements ne sont prévus que sur le côté de la zone en forme de caisson orienté vers l'intérieur du véhicule.

7. Porte de véhicule selon l'une des revendications précédentes, **caractérisée en ce que** dans un creux (22) du support d'équipements, un corps en mousse (20) est disposé pour la protection contre les chocs latéraux.

8. Porte de véhicule selon la revendication 1, **caractérisée en ce que** la paroi du support d'équipements, orientée vers l'intérieur du véhicule est conçue en fonction des idées styliques du moment.

## Patentansprüche

1. Fahrzeugtür, folgendes aufweisend:
eine von einer Außenwand (3) und einer unteren Wand (4) sowie Seitenwänden (5, 6) bestehende, zum Fahrzeuginnenraum offene Türstruktur,
einen Ausrüstungsträger mit einem kasten- oder kassettenförmigen Formteil, wobei die zum Fahrzeuginnenraum gekehrte innere Oberfläche der Kassette oder des Kastens mit Befestigungsmitteln zur Anbringung von für den Fahrzeuginnenraum bestimmten Ausrüstungsteilen, wie z.B. Türgriff, Lautsprecher und andere, versehen ist, wobei der Ausrüstungsträger an der Türstruktur befestigt werden kann, bereits montierte Ausrüstungsteile aufweist, wie z.B. eine Fensterscheibe, einen Fensterhebermechanismus, und einen Fensterhebermotor und andere, im wesentlichen die gewichtsmäßig entscheidenden und/oder Kräfte ausübenden und/oder übertragenden Ausrüstungsteile trägt, und
eine Innenverkleidung,
**dadurch gekennzeichnet, daß**
der Ausrüstungsträger aus zwei Teilen (8, 12) besteht, die beide jeweils im wesentlichen schalenförmig ausgebildet sind und ein Kassettenprofil mit einem geschlossenen Rand um den gesamten Umfangsrand der besagten Kassette bilden, wobei die beiden Teile zwei von einander beabstandete und parallel zur Türaußenwand (3) laufende Wände bilden, und daß
die der Türaußenwand (3) zugewandte Außenfläche der Kassette parallel zu, und nahe an einer Bewegungsbahn (F) der im Raum zwischen der Türaußenwand (3) und der besagten Kassettenoberfläche absenkbaren Fensterscheibe verläuft.

2. Fahrzeugtür nach Anspruch 1, **dadurch gekennzeichnet, daß** die Bewegungsbahn (F) und die Oberfläche der Kassette, die parallel zu dieser verläuft, eine Krümmung aufweisen.

3. Fahrzeugtür nach einem der Ansprüche 1 oder 2, **dadurch gekennzeichnet, daß** die Formteile (8, 12) in etwa ähnliche Abmessungen aufweisen und um ihren gesamten Umfang herum fest miteinander verbunden sind.

4. Fahrzeugtür nach Anspruch 3, **dadurch gekennzeichnet, daß** eines der beiden Formteile (12) kleinere Abmessungen als das andere Formteil (8) aufweist.

5. Fahrzeugtür nach Anspruch 1 oder 2, **dadurch gekennzeichnet, daß** der Ausrüstungsträger einteilig ausgebildet ist, und daß der kassettenförmige Bereich Öffnungen oder Vertiefungen für den Einbau von Ausrüstungsteilen aufweist.

6. Fahrzeugtür nach Anspruch 5, **dadurch gekennzeichnet, daß** die Öffnungen oder Vertiefungen nur auf der Seite des kassettenförmigen Bereiches vorgesehen sind, die dem Fahrzeuginnenraum zugekehrt ist.

7. Fahrzeugtür nach einem beliebigen der vorangehenden Ansprüche, **dadurch gekennzeichnet, daß** in einer Ausbuchtung (22) des Ausrüstungsträgers ein Schaumstoffkörper (20) zum Schutz gegen Seitenstöße angeordnet ist.

8. Fahrzeugtür nach Anspruch 1, **dadurch gekennzeichnet, daß** die zum Fahrzeuginnenraum gekehrte Wand des Ausrüstungsträgers aktuellen Styling-Gedanken entsprechend gestaltet ist.

## Claims

1. Vehicle door, comprising
a door structure made up of an exterior side (3) and lower (4) and lateral (5, 6) sides, open towards the interior of the vehicle,
an accessories holder having a box-shaped zone, the interior surface of the box facing towards the interior of the vehicle being provided with fixing means for mounting the equipment destined for the interior of the vehicle, such as a door handle, speakers or others, the accessories holder able to be fixed to the door structure, having pre-mounted equipment such as window pane, window-opening mechanism, window-opening motor and others, which essentially supports the decisive equipment as far as load and/or exerting and/or transmitting force is concerned,
an interior covering,
**characterised in that** the accessories holder comprises two pieces (8, 12) which are each essentially of a shell shape forming a box profile with a closed edge around the periphery of the said box, these two pieces forming two sides spaced one from the other and parallel to the exterior side (3) of the door and **in that** the external surface of the box facing the exterior side of the door (3) is parallel and close to a line of movement (F) of the window which is able to be lowered into the space between the exterior side (3) of the door and the said surface of the box.

2. Vehicle door according to claim 1, **characterised in that** the line of movement (F) and the surface of the box to which it is parallel present a curve.

3. Vehicle door according to claim 1 or 2, **characterised in that** the shaped parts (8, 12) have dimensions somewhat similar and are fixed integrally with each other around their periphery.

4. Vehicle door according to claim 3, **characterised in that** one of the two shaped parts (12) has dimensions smaller than the other shaped part (8).

5. Vehicle door according to claim 1 or 2, **characterised in that** the accessories holder is made in a single part and that the box shaped zone has openings or reinforcements for the installation of equipment.

6. Vehicle door according to claim 5, **characterised in that** the openings or reinforcements are only designed on the side of the box shaped zone facing towards the interior of the vehicle.

7. Vehicle door according to one of the preceding claims, **characterised in that** in the recess (22) of the accessories holder there is a foam part (20) for protection against lateral shocks.

8. Vehicle door according to claim 1, **characterised in that** the side of the accessories holder facing towards the interior of the vehicle is designed according to the current style ideas.
